# EUROPÄISCHE PATENTSCHRIFT

(11) **EP 0 777 880 B1**
(45) Veröffentlichungstag und Bekanntmachung des Hinweises auf die Patenterteilung: **21.10.1998**
(21) Anmeldenummer: 95928952.1
(22) Anmeldetag: 21.08.1995
(51) Int. Cl.: G06F 13/40

(54) **VERFAHREN ZUR SIMULTANEN DIGITALEN VERARBEITUNG MEHRERER VON/ZU AUDIO-VIDEOGERÄTEN ZU ÜBERTRAGENDEN DATENPAKETE IN EINEM RECHNERSYSTEM**
METHOD FOR THE SIMULTANEOUS DIGITAL PROCESSING OF SEVERAL DATA PACKETS FOR TRANSMISSION FROM/TO AUDIO/VIDEO EQUIPMENT IN A COMPUTER SYSTEM
PROCEDE DE TRAITEMENT NUMERIQUE SIMULTANE DE PLUSIEURS PAQUETS DE DONNEES A TRANSMETTRE DEPUIS/VERS DES APPAREILS AUDIO/VIDEO DANS UN SYSTEME INFORMATIQUE

(30) Priorität: 25.08.1994 DE 4430247
(43) Veröffentlichungstag der Anmeldung: 11.06.1997
(73) Patentinhaber: SIEMENS AKTIENGESELLSCHAFT, 80333 München (DE)
(72) Erfinder: BERGMANN, Johannes, D-82327 Tutzing (DE); GEIGER, Michael, D-80686 München (DE)
(86) Internationale Anmeldenummer: DE9501101
(87) Internationale Veröffentlichungsnummer: WO9606399

(56) Entgegenhaltungen:
- EP-A- 0 201 065
- EP-A- 0 472 814
- EP-A- 0 553 549
- IBM TECHNICAL DISCLOSURE BULLETIN, Bd. 37, Nr. 6a, Juni 1994 NEW YORK US, Seiten 95-98, 'Method for the Conversion of Multimedia Streams to Packet Streams'

## Beschreibung

Verfahren zur simultanen digitalen Verarbeitung mehrerer von/zu Audio-Videogeräten zu übertragenden Datenpakete in einem Rechnersystem

Mit dem Aufkommen von Multimedia in Rechnern wurden erstmalig Audio und Video als gleichwertige Datentypen zu Text und Graphik im Rechner integriert, so daß eine Vielzahl der heute erhältlichen Rechner über audiovisuelle Fähigkeiten verfügen. Allerdings sind Audio- und Videofunktionalität (A/V-Funktionalität) meist voneinander getrennt, und es existieren unterschiedliche Benutzungs- und Programmierschnittstellen auf den verschiedenen Plattformen. Benötigt wird eine skalierbare und nach oben Hardware-neutrale Schnittstelle zur integrierten Verwaltung der lokalen audiovisuellen Ressourcen des Rechners. Darüber hinaus gewinnen zwischen Rechnern ablauffähige verteilte Anwendungen, wie beispielsweise Videokonferenzanwendungen oder Video on Demand-Anwendungen, immer mehr an Bedeutung. Aus diesem Grund müssen Schnittstellen zwischen der Verwaltung der lokalen A/V-Ressourcen und dem Austauschen der A/V-Daten zwischen Rechnern geschaffen werden.

Das der Erfindung zugrunde liegende Problem besteht darin,ein Verfahren anzugeben,mit dem die oben angegebenen Nachteile beseitigt werden.Dieses Problem wird gemäß den Merkmalen des Patentanspruches 1 gelöst.

Weiterbildungen der Erfindung ergeben sich aus den Unteransprüchen.

Das zu beschreibende Verfahren hat folgende Vorteile:
Es ermöglicht
- das Aufnehmen und Abspielen von A/V-Daten in einem Rechner,
- die (De-)Kodierung bzw. (De-)Kompression von A/V-Daten in Echtzeit,
- den Transport der (u.U. synchronisierten) A/V-Datenpakete innerhalb des Rechners zwischen unterschiedlichen Peripheriegeräten, wie z.B. Bildschirm, Hintergrundspeicher, Netzadapter,
- sowie das Verschicken von A/V-Daten an bzw. das Empfangen von A/V-Daten von anderen Rechensystemen.

Der Zugang zu diesem A/V-System erfolgt über eine Protokollschnittstelle, die an die Bedürfnisse der Anwendung anpaßbar ist. Das A/V-System ist modular aufgebaut. Dadurch wird ein hoher Grad an Skalierbarkeit und Portierbarkeit erreicht.

Anhand von Ausführungsbeispielen,die in den Figuren dargestellt sind,wird die Erfindung weiter erläutert.Es zeigen
Figur 1 den Aufbau des AV Softwaresystems,
Figur 2 die Funktionsweise eines Moduls,des Protokollmoduls,
Figur 3 die Struktur einer Dateneinheit,
Figur 4 ein erstes Ablaufbeispiel,
Figur 5 ein zweites Ablaufbeispiel.

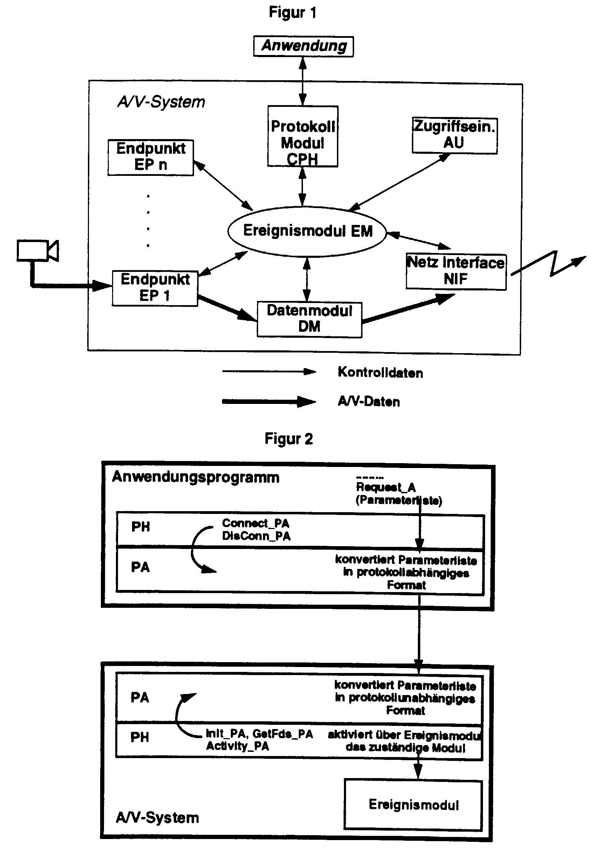

Die Architektur des A/V-Systems,Figur 1
Das A/V-System kapselt die Audio/Video-Hardware (Geräte) des Ziel systems (also die lokale Ein- und Ausgabe der audiovisuellen Daten des A/V-Systems) in sogenannten Endpunktmodule (EP). So liefert beispielsweise das Endpunktmodul, das die Framegrabber-Karte des Rechners verwaltet, die digitalisierten Daten der Videokamera über eine einheitliche Endpunkt-Schnittstelle an das A/V-System. Ein anderes Endpunktmodul steuert die Ausgabe der Video-Daten auf den Bildschirm, wieder ein anderes könnte dieselben Daten auf eine Festplatte schreiben. Je nach der auf dem Zielsystem unterstützten A/V-Funktionalität können geeignete Endpunktemodule frei konfiguriert werden.
Der Austausch der A/V-Datenpakete zwischen Rechnern erfolgt über ein Netz-Interface (NIF).
Als Kontrollschnittstelle für das A/V-System dient ein Protokollmodul (CPH). Über diese Schnittstelle wird das Einrichten von Quellen und Senken auf der lokalen Plattform und das logische Verschalten von Quellen und Senken (lokal oder zwischen Rechnern) ermöglicht. Quellen und Senken entsprechen dabei Endpunkten (im lokalen Fall) bzw. Zugangspunkten im Netzinterface NIF (im entfernten Fall).
Der Transport von A/V-Datenpaketen zwischen Endpunkten und/oder dem NIF wird über ein Datenmodul (DM) gesteuert. Dieses Modul realisiert eine effiziente Flußsteuerung der A/V-Datenpakete innerhalb des A/V-Systems.
Die Zugangskontrolle zum A/V-System kann über eine Zugriffseinheit (AU) erfolgen. Hier findet die Authentifikation der Anwendung statt.
Kern des A/V-Systems ist ein Ereignismodul (EM). Das Ereignismodul EM überwacht,an welcher Stelle zu welchem Zeitpunkt Ereignisse vorliegen und aktiviert die entsprechenden Komponenten. Ein Beispiel für ein solches Ereignis ist das Eintreffen einer von der Anwendung geschickten Protokollnachricht am Protokollmodul CPH. Das Ereignismodul EM dient damit ausschließlich zur Steuerung des A/V-Systems. Es ist nicht an der Verarbeitung der Nutzdaten innerhalb des A/V-Systems beteiligt.

Die Endpunkte und deren Module (EP).
Die Endpunkte kapseln die hardwareabhängigen Teile des A/V-Systems. Die dazu erforderlichen Endpunktmodule können dynamisch nach Bedarf von einer generischen EP-Unit erzeugt werden. Nachdem Endpunkte als Quellen und Senken auf Anfrage einer Anwendung hin initialisiert wurden, können sie logisch verschaltet werden. Verbindungen bestehen grundsätzlich von einer Quelle zu einer oder auch mehrerer Senken (unidirektionale Verbindungen). Nach der Verschaltung kann mit geeignetem A/V-Datentransport von der Quelle hin zu den Senken begonnen werden. Mögliche Endpunkte können u.a. sein:
- Endpunkte zum Aufnehmen (Digitalisieren) von Audio- und Videodaten über Mikrophon bzw. Kamera
- Endpunkte zum Aufnehmen (Digitalisieren) von Audio- und Videodaten über Mikrophon bzw. Kamera bei gleichzeitiger Kompression der A/V-Daten
- Endpunkte zum Abspielen von Audio- und Videodaten über Lautsprecher bzw. Bildschirm
- Endpunkte zum Abspielen von Audio- und Videodaten über Lautsprecher bzw. Bildschirm bei gleichzeitiger Dekompression der A/V-Daten
- Multiplex-Endpunkte zum Synchronisieren von zusammengehörigen Audio- und Videoströmen
- File-Endpunkte zur Unterstützung unterschiedlicher Dateisysteme (z.B. Dateisysteme für CD-ROM oder Festplatten, aber auch Zugriff auf Multimedia-Datenbanken mit spezifischen Dateisystemen)
So dies die darunterliegende A/V-Hardware unterstützt, können Endpunkte so initialisiert und miteinander verschaltet werden, daß auch mehrere A/V-Datenströme parallel verarbeitet werden können. Die Steuerung dieser unterschiedlichen A/V-Ströme kann durch mehrere Anwendungen erfolgen. Im Falle der Kompressions-Endpunkte können beispielsweise auch mehrere existieren, die den Einsatz unterschiedlicher Kompressionsverfahren simultan ermöglichen.

Informationen über Endpunkte und deren Realisierung in einem Modul werden über eine eindimensionale Feldstruktur (ep_id_ctrlblk[]) verwaltet, die über Endpunkt-ID-Kennworte indizierbar ist. Jeder dieser Feldeinträge enthält wiederum Informationen zur jeweils verwalteten Geräteklasse (ep_ctrlblk), sowie zu Art und Status der möglichen Übertragung von Daten (TransmissionMode, TransmissionState). Der ep_ctrlblk besitzt eine Liste aller über ihn ansprechbarer Geräte. Die Listenelemente sind dabei von der Struktur her einheitliche Kontrollblöcke (dev_ctrlblk), die den Zugriff auf die spezifischen Eigenschaften des von ihnen beschriebenen Gerätes ermöglichen. Geräte-Kontrollblöcke enthalten Informationen wie:
- Typenbezeichnung des Gerätes
- Status des Gerätes (OPENED/CLOSED)
- Verweise auf gerätespezifische Routinen zum/zur
   - Öffnen des Gerätes
   - Schließen des Gerätes
   - Abfrage der Geräteeigenschaften (z.B. Kompressionsverfahren, Auflösung, ...)
   - Lesen/Schreiben von Daten vom/zum Gerät
Der TransmissionMode legt fest, ob das Gerät nur für Audio, nur für Video oder im verschränkten A/V-Modus betrieben wird. Der TransmissionState zeigt an, ob gegenwärtig Daten von bzw. zum verwalteten Gerät übertragen werden Beim Starten der lokalen A/V-Komponente wird für alle ep_id_ctrlblk-Feldeinträge (z.B. 16) der ep_ctrlblk auf NULL gesetzt und der TransmissionState auf OFF. In einem zweiten Schritt werden die an diesem Computer verfügbaren A/V-Geräteklassen (z.B. Gerät zur Aufnahme von Audio, Gerät zum Abspielen von Audio) initialisiert, indem die (im Beispiel zwei) ep_ctrlblk-Strukturen mit den spezifischen Parametern (also dev_ctrlblk) geladen werden. Diese Strukturen werden dann im ep_id_ctrlblk[]-Feld gespeichert.
Damit sind die Endpunkte initialisiert und können im weiteren Ablauf entsprechend der ankommenden Requests (z.B. Anfrage bzgl. Fähigkeiten der Endpunkte, Öffnen Quelle/Senke, Verschalten Quelle/Senke, usw.) verwendet werden. Die Datenstrukturen der einzelnen Endpunkte werden dynamisch nach Bedarf aktualisiert. Die Gesamtheit der zu verwaltenden Endpunkte wird von den anderen Modulen aus betrachtet als eine EP-Einheit (EP-Unit) gesehen.

Das Protokollmodul CPH
Das Protokollmodul CPH realisiert die Schnittstelle zur Anwendung. Es ist in zwei Schichten unterteilt, das erste Untermodul (PA) und das zweite Untermodul (PH). Ein PH kann mit unterschiedlichen PAs verbunden werden, die wiederum unterschiedliche Kommunikationsmechanismen realisieren. PAs können für Remote Procedure Call-Protokolle und das Remote Operation Service-Protokoll der ISO (ISODE-ROSE) sein. Denkbar sind hier auch der RPC-Mechanismus des Distributed Computing Environments (DCE-RPC) der OSF oder einfache Call-Schnittstellen für ausschließlich lokal ablauffähige Applikationen.
Nachdem der PA die von der Anwendung gesendeten Anfragen in ein protokollneutrales Format gewandelt hat, wertet der PH die Anfragen aus und aktiviert (über das Ereignismodul) die Module im A/V-System, die für die jeweilige Anfrage zuständig sind (z.B. die Zugriffseinheit, wenn sich eine Anwendung beim A/V-System anmelden will). Desgleichen verschickt das Protokollmodul CPH Ergebnisse der Anfragen, Fehlermeldungen und Informationen über spezielle im A/V-System aufgetretene Ereignisse, über die die Anwendung informiert werden will.

Der protokollabhängige PA bietet dem protokollunabhängige PH Basis funktionen an, mit den dieser Client/Server-Beziehungen zwischen zwei kommunizierenden Modulen (z.B. Anwendung und A/V-System) herstellen und verwalten kann. Dies sind:
- Init_PA: Mit dieser Funktion wird der PH als Server initialisiert. Init_PA wird vom PH des A/V-Systems verwendet.
- GetFds_PA: Diese Funktion liefert einen File-Descriptor, der anzeigt ob eine Anfrage an den Server vorliegt. GetFds_PA wird vom PH des A/V-Systems verwendet.
- Activity_PA: Mit dieser Funktion wird eine vorliegende Anfrage vom PA abgeholt. Die Anfrage liegt jetzt in protokollneutralem Format vor, d.h. das Format wurde vom PA vorher gewandelt. Activity_PA wird vom PH des A/V-Systems verwendet. GetFds_PA und Activity_PA sind notwendig, damit das A/V-System nicht blockiert wird, solange keine Anfragen an das A/V-System vorliegen.
- Connect_PA: Mit dieser Funktion wird der PH als Client initialisiert. Connect_PA wird vom PH der Anwendung verwendet.
- DisConn_PA: Mit dieser Funktion wird der PH als Client abgemeldet. DisConn_PA wird vom PH der Anwendung verwendet.

Die Umwandlung der Protokollformate im PA ist eine Abbildung der protokollspezifischen Datenstrukturen auf generische Datenstrukturen für den PH.
Figur 2 erläutert den beschriebenen Mechanismus.

Das Ereignismodul EM
Das Ereignismodul ist der Kern des A/V-Systems. Es ist zuständig für die Verwaltung der Abläufe innerhalb des A/V-Systems, d.h. es schaltet den "Handlungsablauf" innerhalb des A/V-Systems nach Bedarf zwischen den Modulen um. Es ist damit in der Lage, auch auf Rechnern ohne Echtzeitbetriebssystem die Einhaltung der für die Verarbeitung von kontinuierlichen Medien (dazu gehören audiovisuelle Medien) notwendigen Zeitbedingungen zu gewährleisten.

Das EM überwacht die Schnittstellen aller A/V-System-Module zu Peripheriegeräten auf das Eintreffen von Ereignissen. Muß ein Modul auf das Eintreffen eines Ereignisses warten (z. B. ein EP auf ein Signal der Audiohardware, daß ein neuer Datenblock zur Verfügung steht), so wird ein Deskriptor für dieses Ereignis kreiert, der dann in die Ereignis-Warteschlange des EM eingegliedert werden kann. Beim Eintreffen des Ereignisses wird der entsprechende Endpunkt aktiviert, der dann die Daten in Empfang nimmt. Nach Beendigung dieser Aktion wird die Kontrolle über das A/V-System wieder an den EM gegeben, der dann auf das nächste Ereignis in seiner Warteschlange reagieren kann.
Daten werden nicht über den EM transportiert. Hier erfolgt ein direkter Transport zwischen den betroffenen Modulen.

In der Initialisierungsphase des A/V-Systems wird für den EM eine (anfangs leere) Liste von File-Deskriptoren angelegt. Die Struktur dieser File-Deskriptoren enthält:
- File-Deskriptor-ID: Diese Nummer erhält man durch einen gerätespezifischen Aufruf an das zu überwachende Gerät, um das Betriebssystem in die Lage zu versetzen Ereignisse, die das Gerät melden will, in Empfang zu nehmen.
- Markierung, die zeigt, ob dieser File-Deskriptor beim Lesen oder Schreiben verwendet wird.
- Priorität des File-Deskriptors.
- Verweis auf die Funktion die beim Eintreffen eines Ereignisses, das diesen File-Deskriptor betrifft, ausgeführt werden soll.
Soll nun ein File-Deskriptor zum Überwachen eines speziellen Ereignisses erzeugt werden, so wird die oben beschriebene Struktur gefüllt und in die Liste der File-Deskriptoren eingefügt. Der Kern des EM ist eine Endlos-Schleife, die alle in der File-Deskriptor-Liste befindlichen Elemente bzgl. des Eintreffens von Ereignissen überprüft. Wurde ein solches Ereignis registriert, wird die in der File-Derskriptor-Struktur referenzierte Funktion ausgeführt (Select-Mechanismus). Bei Vorhandensein mehrerer Ereignisse wird gemäß dem Prioritäts-Feld der File-Deskriptor-Struktur das Ereignis mit der höchsten Priorität ausgewählt, und die zugehörige Funktion aktiviert.
Nach Beendigung der Aktivität der aufgerufenen Funktion geht die Programmkontrolle wieder an den EM über, der erneut alle Elemente der File-Deskriptor-Liste auf inzwischen eingetroffene Ereignisse überprüft.
Die allererste Struktur, die nach der Initialisierungsphase des A/V-Systems in die File-Deskriptor-Liste eingetragen wird, ist ein File-Deskriptor-Element zum Überwachen der Protokollschnittstelle des CPH nach außen hin zu den Anwendungen. Damit "horcht" das A/V-System an seiner Schnittstelle zur Anwendung. Trifft eine Anfrage einer Anwendung ein, so "wacht das A/V-System auf", und es werden je nach Ablauf des Dialogs weitere File-Deskriptor-Elemente in die File-Deskriptor-Liste eingetragen.

Das Datenmodul
Das Datenmodul verwaltet die lokal im Rechner zu verarbeitenden A/V-Datenpakete. Bei Eintreffen eines solchen Paketes an einem EP oder am NIF (geschickt von einem anderen Rechner), wird dynamisch Speicherplatz alloziiert, und die A/V-Daten werden dann dort abgelegt. Erst wenn sichergestellt ist, daß ein solches Paket im gesamten A/V-System nicht mehr gebraucht wird, wird der Speicherplatz vom DM freigegeben. Der DM sorgt auch dafür, daß A/V-Daten im A/V-System nicht dupliziert werden, indem er nur Referenzen auf die Pakete an andere Komponenten des A/V-Systems weitergibt.

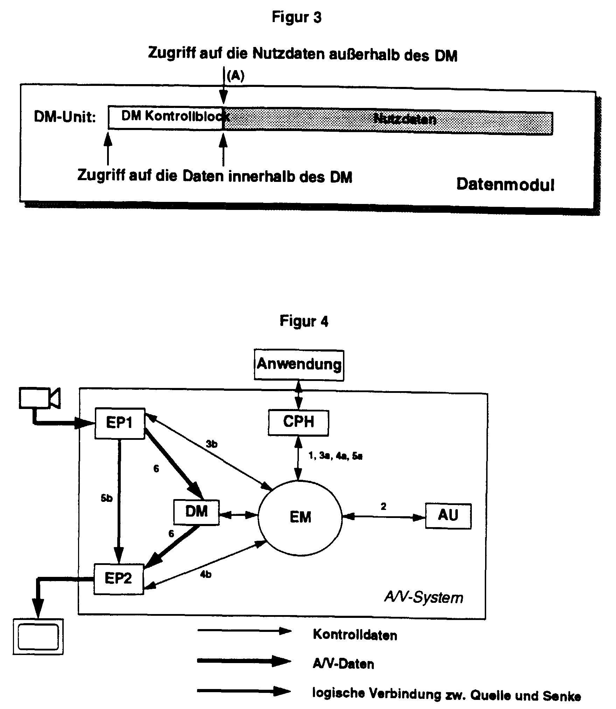

Sollen Nutzdaten (z. B. Audiodaten oder Videodaten) im A/V-System abgelegt werden, so wird über die Funktion dm_alloc im Datenmodul der dafür benötigte Speicherplatz alloziiert. Dabei reserviert der DM zusätzlich zum Speicherplatz für die Nutzdaten eine an diese Speichereinheit angrenzende Kontrollblock, der Informationen zu der jeweiligen Nutzdateneinheit enthält. Außerhalb des DMs ist dieser Kontrollblock nicht sichtbar. Nutzdaten und Kontrollblock bilden zusammen eine DM-Einheit oder DM-Unit. Figur 3 beschreibt diesen Mechanismus.

Der Kontrollblock besteht aus folgenden Strukturelementen:
- Nutzdatentyp (AUDIO/VIDEO/NOAV)
- Länge des Nutzdatenblocks innerhalb der DM-Einheit
- Zähler für die Anzahl der Module (z. B. EPs, NIF), die diese DM-Einheit noch benötigen
- Verweis auf eine Funktion, über die eine nutzdaten-spezifische Freigabe der Daten möglich ist.
Gibt ein Modul eine DM-Einheit frei, so wird anhand des Zählers überprüft, ob noch weitere Module an dieser DM-Unit interessiert sind (Zähler>1) und der Zähler ggfs. dekrementiert. Ist dies nicht der Fall, so wird erst über die nutzdaten-spezifische Freigabefunktion der Nutzdatenteil freigegeben und dann die DM-Unit vom Datenmodul freigegeben. Der DM bietet desweiteren Funktionen an, mit den der Nutzdatenteil einer DM-Unit mit A/V-Daten geschrieben bzw. gelesen werden kann. Innnerhalb des A/V-Systems werden nur Verweise auf die Nutzdaten (im Bild Markierung A) verwaltet, so daß das Schreiben der Nutzdaten in die DM-Unit nur ein einziges Mal geschehen muß. Für Daten die vom Netz kommen bzw. Daten die zum Netz gehen, stehen im DM Schreib- und Lese-Funktionen zur Verfügung, die die Nutzdaten unabhängig von der verwendeten Plattform in Network Byte-Ordering (also Big-Endian-Format) wandeln bzw. von Network Byte-Ordering in das von der lokalen Maschine unterstützte Endian-Format wandeln.

Das Netz Interface NIF
Das Netz Interface ist (bzgl. der A/V-Daten) der Zugangspunkt zu/von anderen Rechnern. Das NIF ist ein spezieller Endpunkt, der die Funktionalität des Netzzugangs kapselt. Wird beispielsweise im CPH erkannt, daß ein von der Anwendung angekommener Request zur Verschaltung einer lokalen Quelle mit einer Senke nicht lokal ausgeführt werden kann, da die Senke sich auf einem anderen Rechner befindet, so wird über das NIF ein entsprechender Zugang zu diesem Rechner eingerichtet. Das NIF kann transparent für die übrigen A/V-Systemkomponenten beliebige Netztransportsysteme (TCP/IP, UDP/IP, ...) und Netzinfrastrukturen (Ethernet, FDDI, ISDN, ...) unterstützen.

Das NIF wird wie die A/V-Geräte-spezifischen Endpunkte über die EP-Unit angesprochen. Beim Eröffnen eines E/A-Ports zum Netz wird innerhalb des NIF neben dem (Netz- und Transportprotokoll-abhängigen) Einrichten des Ports ein NIF-Kontrollblock angelegt, der die EP-ID, den Verbindungstyp (verbindungsorientiert/verbindungslos) und den Datentyp (Audio/ Video) enthält. Die Überwachung des Ports bzgl. ankommender Daten geschieht über den EM. Nach außen hin wird der Port mit Hilfe der zugehörigen EP-ID über Lese- und Schreib-Funktionen angesprochen.

Die Zugriffseinheit AU
Über die Zugriffseiheit können sich Anwendungen beim A/V-System anmelden bzw. (vor Beendigung der Anwendung selbst) abmelden.

Innerhalb der AU wird eine Zugriffs-Liste geführt, die Informationen über die aktuell bei der AU registrierten Anwendungen enthält. Trifft eine Anfrage zur Registrierung einer Anwendung am lokalen A/V-System ein, so prüft die AU, ob die Anwendung zur Nutzung der A/V-Komponente berechtigt ist (z.B. Paßwort-Prüfung, Protokollversion, usw.). Berechtigte Anwendungen werden dann, so sie noch nicht in der Zugriffs-Liste geführt werden, in dieser eingetragen. Die Anwendung erhält je nach Ergebnis der Prüfung entweder eine Fehlermeldung oder eine Identifikationsnummer zurück. Bei späteren Anfragen seitens der Anwendung an das A/V-System kann von der AU in der Zugriffs-Liste über die Identifikationsnummer überprüft werden, ob die Anwendung zu dieser Anfrage berechtigt ist oder nicht.
Beim Abmelden der Anwendung wird der entsprechende Eintrag in der Zugriffs-Liste gelöscht.

Beispielablauf zur Nutzung des A/V-Systems,Figur 4
Es wird beschrieben, wie über die Videokamera aufgenommene Bildsequenzen lokal auf demselben Rechner angezeigt werden können.
① Anwendung meldet sich über CPH
② Authentifizierung über AU
③ Öffnen des Kamera-Endpunktes EP1 als Quelle (3b) über CPH (3a)
④ Öffnen des Videoabspiel-Endpunktes EP2 als Senke (4b) über CPH (4a)
⑤ Logisches Verschalten der Endpunkte (5b) über CPH (5a)
⑥ Transport der A/V-Daten über DM zwischen EP1 und EP2 Anmerkung: Bei allen diesen Aktionen ist der EM als Schaltzentrale mit involviert.

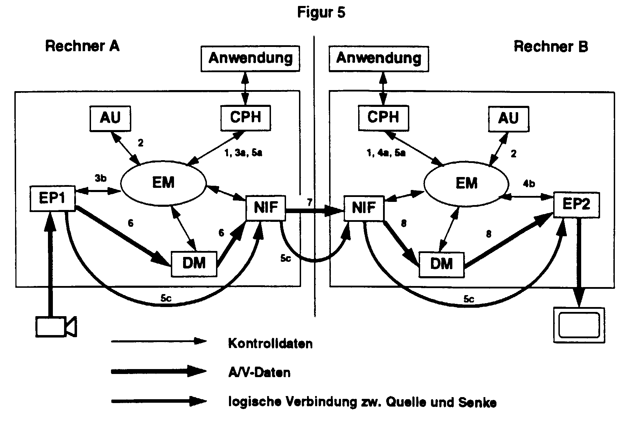

Nutzung zwischen zwei Rechnern,Figur 5
Analog zu 4.1 wird der Fall dargestellt, wenn sich Quelle und Senke auf unterschiedlichen Rechnern befinden.
① Anwendung meldet sich über CPH beider Rechner
② Authentifizierung über AU beider Rechner
③ Öffnen des Kamera-Endpunktes EP1 als Quelle (3b) über CPH (3a) auf Rechner A
④ Öffnen des Videoabspiel-Endpunktes EP2 als Senke (4b) über CPH (4a) auf Rechner B
⑤ Logisches Verschalten der Endpunkte (5b) über CPH (5a) und NIF (5c) der Rechner A und B
⑥ Transport der A/V-Daten über DM zwischen EP1 und NIF des Rechners A
⑦ Verschicken der A/V-Daten vom NIF des Rechners A zum NIF des Rechners B
⑧ Transport der A/V-Daten über DM zwischen NIF und EP2 des Rechners B
Anmerkung: Bei allen diesen Aktionen ist der EM als Schaltzentrale mit involviert.

## Patentansprüche

1. Verfahren zur simultanen digitalen Verarbeitung von mehreren von/zu Audio-Videogeräten zu übertragenden audiovisuellen Datenpaketen in einem Rechnersystem,
- bei dem Informationen über jedes Audio-Videogerät als Endpunkt (EP) jeweils in einem Endpunktmodul zusammengefaßt werden,
- bei dem durch ein Datenmodul (DM) der Transport der Datenpakete zwischen Endpunkten (EP) gesteuert wird und eine Speicherung veranlaßt wird,
- bei dem das Auftreten von Ereignissen, bei denen ein Datenverkehr zwischen Endpunkten angestoßen werden soll, durch ein Ereignismodul überwacht wird,
- bei dem das Einrichten von Endpunkten (EP) als Quelle bzw. Senke für die Datenpakete und das logische Verschalten der Endpunkte durch ein Protokollmodul (CPH) durchgeführt wird.

2. Verfahren nach Anspruch 1,
- bei dem der Datenaustausch zwischen Endpunkten, die verschiedenen Rechnern zugeordnet sind, über ein Netzinterface (NIF) erfolgt.

3. Verfahren nach Anspruch 1 oder 2,
- bei dem die Module ein Audio/Video-System bilden,
- bei dem der Zugriff eines Anwenders zum System durch eine Zugriffseinheit (AU) kontrolliert wird.

4. Verfahren nach einem der vorhergehenden Ansprüche,
- bei dem die Endpunktmodule mit ihren Informationen als Listeneinträge in einem Feld verwaltet werden,
- bei dem pro Endpunktmodul und Eintrag als Information das zugeordnete Gerät und dessen Eigenschaften enthalten sind und
- bei dem ein Eintrag über ein das Endpunktmodul spezifierendes Kennwort angesteuert wird.

5. Verfahren nach Anspruch 4,
- bei dem in einem Transmissionsmode festgelegt wird, in welcher Betriebsart Quelle und/oder Senke das einem Endpunktmodul zugeordnete Gerät betrieben wird.

6. Verfahren nach Anspruch 5,
- bei dem beim Starten eines Gerätes alle Einträge des Feldes auf Null gesetzt werden und der Transmissionsmode abgeschaltet wird, bei dem an einem Rechner verfügbaren Geräteklassen dadurch initialisiert werden, daß die Einträge mit den spezifischen Parametern der Geräteklassen geladen werden und gespeichert werden und
- bei dem bei Auftreten einer Anforderung oder eines Ereignisses über das Kennwort der zugeordneter Eintrag angesteuert wird.

7. Verfahren nach einem der vorhergehenden Ansprüche,
- bei dem das Protokollmodul (CPH) als Schnittstelle zur Anwendung realisiert wird und aus zwei Untermodulen besteht, von denen das eine Untermodul (PA) die vom Anwender gesendeten Anfragen in ein protokollneutrales Format umwandelt und das andere Untermodul (PH) die Anfrage auswertet und die Module, die für die jeweilige Anfrage zuständig sind, aktiviert.

8. Verfahren nach Anspruch 7,
- bei dem das zweite Untermodul mehreren ersten Untermodulen zugeordnet werden kann.

9. Verfahren nach einem der vorhergehenden Ansprüche,
- bei dem das Ereignismodul (EM) die Schnittstellen aller Module auf das Eintreffen von Ereignissen überwacht,
- bei dem, wenn ein Modul auf das Eintreffen eines Ereignisses warten muß, für dieses Ereignis ein File-Deskriptor erzeugt wird, der in eine Ereigniswarteschlange eingegliedert wird,
- bei dem bei Eintreffen des Ereignisses das entsprechende Modul aktiviert wird, das dann die Daten in Empfang nimmt.

10. Verfahren nach Anspruch 9,
- bei dem in der Initialisierungsphase für das Ereignismodul eine Liste von Deskriptoren angelegt wird, die ein Kennwort, eine Markierung, die zeigt, ob der Deskriptor beim Lesen oder Schreiben verwendet werden soll, die Priorität des Deskriptors und ein Verweis auf die Funktion, die beim Eintreffen des Ereignisses ausgeführt werden soll, enthält, bei dem zum Überwachen eines Ereignisses dieser Deskriptor gefüllt wird und in die Deskriptorliste eingefügt wird, bei dem das Ereignismodul alle in der Deskriptorliste befindlichen Einträge bezüglich des Eintreffens von Ereignissen überprüft und wenn ein solches Ereignis registriert wird, die in der Deskriptorliste zugeordneten Funktionen ausführt.

11. Verfahren nach Anspruch 10,
- bei dem in der Initialisierungsphase in die Deskriptorliste ein Deskriptor zum Überwachen der Protokollschnittstelle des Protokollmoduls nach außen zur Anwendung eingetragen wird, der als erster vom Ereignismodul ausgeführt wird.

12. Verfahren nach einem der vorhergehenden Ansprüche,
- bei dem das Datenmodul die im Rechner zu verarbeitenden Datenpakete verwaltet, bei Eintreffen eines solchen Paketes an ein Endpunktmodul oder an das Netzinterface dynamisch den Speicherplatz zuordnet und dort die Datenpakete ablegt.

13. Verfahren nach Anspruch 12,
- bei dem im Datenmodul (DM) festgelegt wird, daß ein Datenpaket erst dann gelöscht wird, wenn es im gesamten System nicht mehr gebraucht wird.

14. Verfahren nach Anspruch 13,
- bei dem das Datenmodul dafür sorgt, daß Datenpakete im System nicht dubliziert werden, da nur Referenzen auf die Datenpakete an andere Komponenten des Rechnersystems weitergegeben werden.

## Claims

1. Method for the simultaneous digital processing of a plurality of audio visual data packets to be transmitted from/to audio/video devices in a computer system,
- in which information items concerning each audio/video device are combined as endpoint (EP) in a respective endpoint module,
- in which a data module (DM) controls the transport of the data packets between endpoints (EP) and initiates storage,
- in which the occurrence of events upon which a data traffic between endpoints is to be initiated is monitored by an event module,
- in which the setting up of endpoints (EP) as source and sink for the data packets and the logical interconnection of the endpoints are carried out by a protocol module (CPH).

2. Method according to Claim 1,
- in which the data exchange between endpoints which are assigned to different computers takes place via a network interface (NIF).

3. Method according to Claim 1 or 2,
- in which the modules form an audio/visual system,
- in which the access of a user to the system is controlled by an access unit (AU).

4. Method according to one of the preceding claims,
- in which the endpoint modules are managed with their information items as list entries in a field,
- in which the assigned device and its properties are contained as information per endpoint module and entry, and
- in which an entry is selected by means of a keyword which specifies the endpoint module.

5. Method according to Claim 4,
- in which the operating mode, source and/or sink, in which the device assigned to an endpoint module is operated is stipulated in a transmission mode.

6. Method according to Claim 5,
- in which when a device is started, all the entries of the field are set to null and the transmission mode is switched off, in which device classes available at a computer are initialized by loading the entries with the specific parameters of the device classes and storing them, and
- in which, when a request or an event occurs, the assigned entry is selected by means of the keyword.

7. Method according to one of the preceding claims,
- in which the protocol module (CPH) is realized as interface to the application and comprises two submodules, of which one submodule (PA) converts the enquiries sent by the user into a protocol-neutral format and the other submodule (PH) evaluates the enquiry and activates the modules which are responsible for the respective enquiry.

8. Method according to Claim 7,
- in which the second submodule can be assigned to a plurality of first submodules.

9. Method according to one of the preceding claims,
- in which the event module (EM) monitors the interfaces of all the modules for the arrival of events,
- in which, if a module has to wait for the arrival of an event, a file descriptor is generated for this event, which file descriptor is incorporated into an event queue,
- in which, upon arrival of the event, the corresponding module is activated and then receives the data.

10. Method according to Claim 9,
- in which, in the initialization phase, a list of descriptors is created for the event module, which list contains a keyword, a marking which shows whether the descriptor is to be used for reading or writing, the priority of the descriptor and a reference to the function which is to be executed upon the arrival of the event, in which, in order to monitor an event, this descriptor is filled and is inserted into the descriptor list, in which the event module checks all the entries situated in the descriptor list with regard to the arrival of events and, when such an event is registered, executes the functions assigned in the descriptor list.

11. Method according to Claim 10,
- in which, in the initialization phase, a descriptor for monitoring the protocol interface of the protocol module outwardly to the application is entered into the descriptor list and is the first to be executed by the event module.

12. Method according to one of the preceding claims,
- in which the data module manages the data packets to be processed in the computer and, when such a packet arrives at an endpoint module or at the network interface, dynamically assigns the memory space and stores the data packets there.

13. Method according to Claim 12,
- in which it is stipulated in the data module (DM) that a data packet is deleted only when it is no longer required in the entire system.

14. Method according to Claim 13,
- in which the data module ensures that data packets are not duplicated in the system since only references to the data packets are forwarded to other components of the computer system.

## Revendications

1. Procédé de traitement numérique simultané de plusieurs paquets de données audiovisuelles à transmettre depuis/vers des appareils audio/vidéo dans un système informatique,
- dans lequel des informations sur chaque appareil audio/vidéo sont regroupées sous forme de point d'extrémité (EP) dans un module de point d'extrémité,
- dans lequel, par un module de données (DM), le transport des paquets de données entre les points d'extrémité (EP) est commandé et un enregistrement est demandé,
- dans lequel l'apparition d'événements, lors desquels un trafic de données entre points d'extrémité doit être déclenché, est surveillée par un module d'événement,
- dans lequel l'installation de points d'extrémité (EP) sous forme de source ou de collecteur des paquets de données et l'interconnexion logique des points d'extrémité se fait par un module de protocole (CPH).

2. Procédé selon la revendication 1,
- dans lequel l'échange de données entre points d'extrémité attribués à différents systèmes informatiques se fait par une interface de réseau (NIF).

3. Procédé selon la revendication 1 ou 2,
- dans lequel les modules forment un système audio/vidéo,
- dans lequel l'accès au système d'un utilisateur est contrôlé par une unité d'accès (AU).

4. Procédé selon l'une quelconque des revendications précédentes,
- dans lequel les modules de point d'extrémité avec leurs informations sont gérés sous forme d'entrées d'une liste dans un champ,
- dans lequel figurent comme information, par module de point d'extrémité et entrée, l'appareil attribué et les propriétés de celui-ci et
- dans lequel une entrée est sélectionnée par un mot de passe spécifiant le module de point d'extrémité.

5. Procédé selon la revendication 4,
- dans lequel est défini dans un mode de transmission, lequel des modes de fonctionnement, source et/ou collecteur, est utilisé pour exploiter l'appareil attribué à un module de point d'extrémité.

6. Procédé selon la revendication 5,
- dans lequel, à la mise en route d'un appareil, toutes les entrées du champ sont mises sur zéro et le mode de transmission est déconnecté, dans lequel les classes d'appareil disponibles sur un système informatique sont initialisées par chargement et enregistrement des entrées avec les paramètres spécifiques des classes d'appareil et
- dans lequel, à l'apparition d'une demande ou d'un événement, l'entrée attribuée est sélectionnée via le mot de passe.

7. Procédé selon l'une quelconque des revendications précédentes,
- dans lequel le module de protocole (CPH) est réalisé sous forme d'interface d'application et se compose de deux sous-modules dont l'un (PA) convertit les demandes envoyées par l'utilisateur en un format indépendant du protocole et l'autre (PH) analyse la demande et active les modules qui sont compétents pour la demande en question.

8. Procédé sélon la revendication 7,
- dans lequel le deuxième sous-module peut être attribué à plusieurs premiers sous-modules.

9. Procédé selon l'une quelconque des revendications précédentes,
- dans lequel le module d'événement (EM) surveille les interfaces de tous les modules quant à l'apparition d'événements,
- dans lequel, lorsqu'un module doit attendre l'apparition d'un événement, un descripteur de fichier est créé pour cet événement et intégré dans une file d'attente d'événement,
- dans lequel, à l'apparition de l'événement, le module correspondant est activé et réceptionne ensuite les données.

10. Procédé selon la revendication 9,
- dans lequel, durant la phase d'initialisation du module d'événement, une liste des descripteurs est établie, qui contient un mot de passe, un repère indiquant si le descripteur doit être utilisé à la lecture ou à l'écriture, la priorité du descripteur et une référence à la fonction qui doit être exécutée à l'apparition de l'événement, dans lequel, pour surveiller un événement, ce descripteur est rempli et intégré dans la liste des descripteurs, dans lequel le module d'événement vérifie toutes les entrées figurant dans la liste des descripteurs quant à l'apparition d'événements et, lorsqu'un tel événement est enregistré, exécute les fonctions attribuées dans la liste des descripteurs.

11. Procédé selon la revendication 10,
- dans lequel, durant la phase d'initialisation, un descripteur destiné à surveiller vers l'extérieur l'interface de protocole du module de protocole est inscrit pour application dans la liste des descripteurs et est exécuté en premier par le module d'événement.

12. Procédé selon l'une quelconque des revendications précédentes,
- dans lequel le module de données gère les paquets de données à traiter dans le système informatique, attribue de façon dynamique l'emplacement de mémoire lorsqu'un tel paquet arrive au module de point d'extrémité ou à l'interface de réseau et y dépose les paquets de données.

13. Procédé selon la revendication 12,
- dans lequel est défini dans le module de données (DM) de n'effacer un paquet de données que lorsqu'il ne sera plus utilisé dans l'ensemble du système.

14. Procédé selon la revendication 13,
- dans lequel le module de données veille à ne pas dupliquer des paquets de données dans le système, seules des références aux paquets de données étant retransmises à d'autres composants du système informatique.
